(19) Europäisches Patentamt

European Patent Office

Office européen des brevets

(11) **EP 0 967 816 A1**

(12) **EUROPEAN PATENT APPLICATION**
published in accordance with Art. 158(3) EPC

(43) Date of publication:
29.12.1999 Bulletin 1999/52

(51) Int. Cl.$^6$: **H04Q 7/34**

(86) International application number:
PCT/JP98/00930

(21) Application number: 98905793.0

(22) Date of filing: 06.03.1998

(87) International publication number:
WO 98/41048 (17.09.1998 Gazette 1998/37)

(84) Designated Contracting States:
DE FI FR GB IT SE

(30) Priority: 11.03.1997 JP 5641997

(71) Applicant: **Locus Corporation**
Osaka-shi, Osaka 542-0081 (JP)

(72) Inventors:
• KOSHIMA, Hiroaki,
Ace K Computer Co., Ltd
Osaka-shi, Osaka 542-0081 (JP)

• KUMAMOTO, Katsuhiko,
Ace K Computer Co., Ltd.
Osaka-shi, Osaka 542-0081 (JP)
• MUYA, Kimio,
Ace K Computer Co., Ltd.
Osaka-shi, Osaka 542-0081 (JP)

(74) Representative:
Prüfer, Lutz H., Dipl.-Phys. et al
PRÜFER & PARTNER GbR,
Patentanwälte,
Harthauser Strasse 25d
81545 München (DE)

(54) **FIELD INTENSITY DISTRIBUTION GENERATOR**

(57) An electric field intensity distribution preparation apparatus defines the neighborhood about a repeater as a mesh of an arbitrary size. Then, each mesh is determined whether it is a mesh with sight, a mesh without sight, or a mesh that cannot be reached by a wave on the basis of data of an electronic map. The electric field intensity of each mesh is obtained for the mesh with a sight to produce an electric field intensity distribution of the neighborhood of a repeater. As a result, an electric field intensity distribution preparation apparatus that can easily determine a wave propagation pattern centered about a repeater is provided.

F I G. 2

```
              START
S11
      DEFINE MESH OF ARBITRARY
      SIZE ABOUT REPEATER

S12
          DETERMINE MESH

S13               S14              S15
  MESH WITH      MESH WITH      MESH WITHOUT
  GOOD WAVE      POOR WAVE      WAVE
  PROPAGATION    PROPAGATION    PROPAGATION

        S16
          OBTAIN ELECTRIC FIELD
          INTENSITY OF EACH MESH

        S17
          PRODUCE  ELECTRIC FIELD
          INTENSITY DISTRIBUTION
          OF REPEATER

              END
```

EP 0 967 816 A1

## Description

Technical Field

The present invention relates to an electric field intensity distribution preparation apparatus for obtaining the electric field intensity about an electric wave generation source and a mobile communication system for determining the position of a mobile using the electric field intensity distribution preparation apparatus. More particularly, the present invention relates to a mobile communication system that produces an electric field intensity distribution using an electronic map to determine the position of a mobile using the produced electric field intensity distribution.

Background Art

A mobile position detection method of interest to the present invention is disclosed in, for example, Japanese Patent Publication No. 6-93650. According to the publication, waves from a plurality of repeaters are respectively received at a mobile in a mobile communication system for carrying out communication between a repeater and a mobile via the wave. By using a coverage contour of a reception electric, field level from each repeater obtained in advance, the range in which a mobile can be located corresponding to each reception level is obtained to detect the position of the mobile from the overlap of each range.

However, such a position detection method using a coverage contour is a macro detection method that does not take into consideration the blocking and reflection of the waves due to the building around the mobile and the geography in the actual detection of the position of a mobile. Therefore, this method is suitable for the position detection of a vehicle and the like that travels at high speed. However, there was a problem that this method is not suitable for the position detection of a human being or object that travels at a low speed.

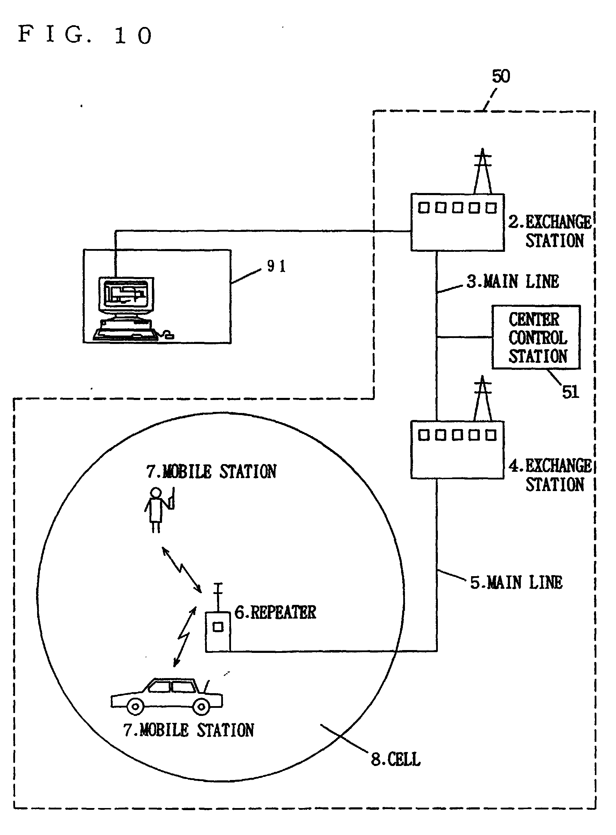

Thus, there is a position determining system utilizing a wireless communication network of small zones such as a PHS. In such a positioning system, applications is considered of a radiation pattern of a wave to carry out position detection of high accuracy. Such a small zone wireless network is shown in Fig. 10.

Referring to Fig. 10, when a fixed or movable center station 91 is to establish conversation communication with a mobile station 7 that is currently on the move, conversation is allowed with a mobile station 7 that is located within a cell 8 of approximately 100m in radius about a repeater 6 from an exchange station 2 to which center station 91 is connected through a main line 3 and an exchange station 4 through another main line 5. A center control station 51 is connected to main lines 3 and 5.

In a PHS system, there is a PHS database. When center station 91 communicates with mobile station 7, the location of mobile station 7 within cell 8 of repeater 6 is recorded in a database 38 of that repeater provided at center control station 5. Alternatively, the entry of mobile station 7 into the area of cell 8 is immediately stored in the database without effecting communication with repeater 6. It is identified that mobile station 7 is within a circle of a radius of approximately 100m about that repeater 6 by utilizing the position information of repeater 6 that is known in advance. Thus, the location of mobile station 7 can be identified.

The information identifying a repeater 6 corresponding to a certain cell 8 in which mobile station 7 is located at a certain time point can be stored and maintained in the database of the PHS. Technically speaking, center station 91 can receive that information.

Center station 91 includes a system that provides a display of a map information on a display device. It is well known that such a system providing a display of map information is easily available in the form of a CD-ROM as in the navigation system of a vehicle.

The position information of a repeater 6 corresponding to a cell 8 in which mobile station 7 is located obtained from the database of the PHS is displayed on a map on the screen of the display device at center station 91. Repeater 6 is indicated by a marker and the like. A circle of 100m in radius is provided on the display centered about the marker. Identification is presented that the mobile station is located within that circle.

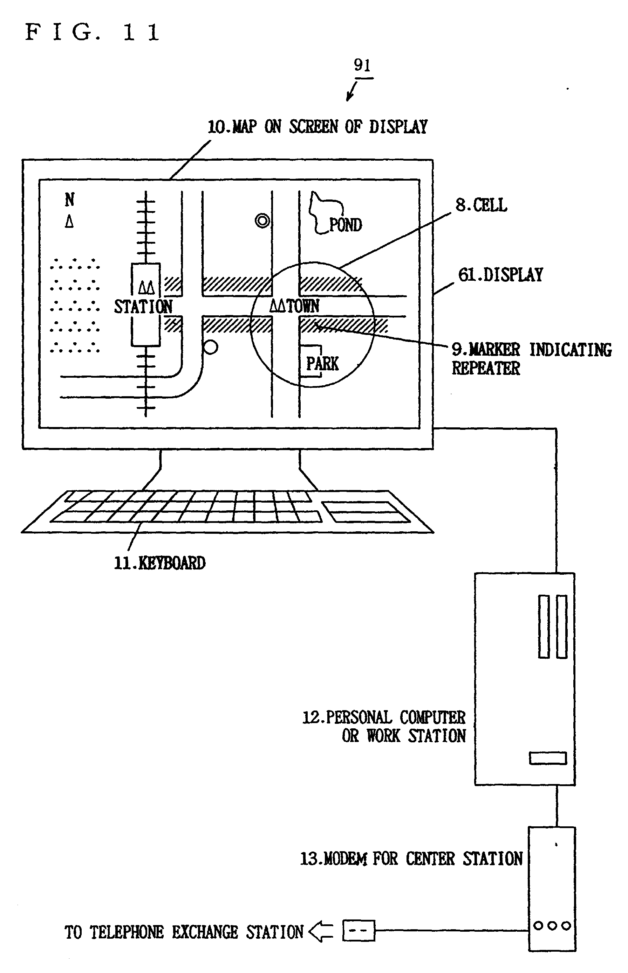

Fig. 11 shows a structure of center station 91. Referring to Fig. 11, center station 91 of the present invention includes a personal computer or a work station 12, and a display 61 and a keyboard 11 connected to personal computer or work station 12. Personal computer or work station 12 is connected to a modem 13 for the center station to be connected to a telephone exchange station 2 shown in Fig. 10 via modem 13 for the center station.

In a map 10 appearing on a screen of the display of personal computer or work station 12 at center station 91, a marker 9 indicating a repeater 6 corresponding to a cell 8 in which mobile station 7 is located, and a circle having a radius of 100m (in some cases, may not be a circle) about marker 9 are displayed. It is indicated that mobile station 7 of interest is located within that circle. Mobile station 7 per se cannot be shown on the display.

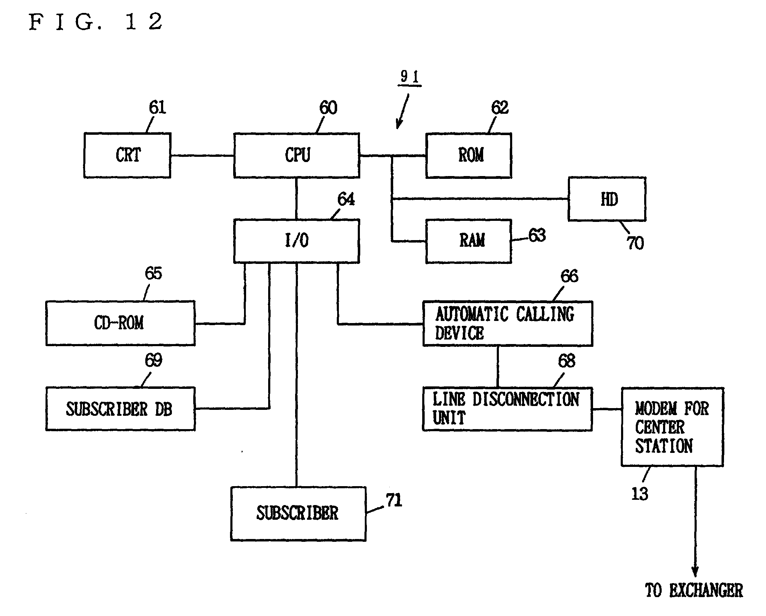

Fig. 12 is a block diagram showing a specific structure of center station 91. Referring to Fig. 12, center station 91 includes a CPU 60 for providing the control of the entire apparatus constituting center station 91, a display 61 connected to CPU 60 for providing a display of the location of mobile station 7 on a map, a ROM 62 and a RAM 63 in which a program and the like defining the operation of center station 91 are stored, and an I/O interface 64 functioning as an interface with an external device.

A CD-ROM drive device 65 for providing a display of map data via I/O interface 64, an automatic calling device 66 for connection to exchange station 2 of the PHS system, and a line disconnection unit 68 for effecting a call by automatic calling device 66 as necessary and disconnecting the line immediately after receiving data of repeater 6 near which mobile station 7 is located are connected. Line disconnection unit 68 is connected to telephone exchange station 2 via center station modem 13.

In addition to directly designating a mobile station 7 from center station 91 via keyboard 11, the line from a subscriber 71 asking for the position information of mobile station 7 is input via I/O interface 64. A check is effected through a subscriber database 69 connected to I/O interface 64 to identify whether the input subscriber is a proper predetermined subscriber.

The procedure of sending a signal and receiving position information to search for the position information of mobile station 7 will be described hereinafter with reference to Figs. 10, 11 and 12. First, keyboard 11 at center station 91 is manipulated to dial automatically the PHS telephone number of mobile station 7 of interest under control of personal computer or work station 12. As shown in Fig. 10, a telephone line is connected to mobile station 7 via a repeater 6 corresponding to cell 8 in which that mobile station 7 is located through exchange station 2 and the like. When line connection is established between center station 91 and mobile station 7, the code number of the relevant repeater 6 is recognized and stored in the database of the PHS. Since this recognition and storage is carried out instantly, the line between center station 91 and mobile station 7 can be disconnected immediately. The position information of repeater 6 is represented by the code of repeater 6 or by the latitude and longitude of repeater 6. The position information is immediately sent from the PHS database to modem 13 at center station 91 and transmitted to personal computer or work station 12.

At personal computer or work station 12, map information is sent in advance from the incorporated CD-ROM drive 65. The map information is provided as a map 10 on the screen of display 61. By placing the position information represented by the code or the latitude and longitude of repeater 6 on map 10, repeater 6 can be indicated by marker 9 as shown in Fig. 11.

As described above, entry of mobile station 7 into cell 8 of repeater 6 is recognized and stored in the database. The information thereof is provided to center station 1, so that the location of mobile station 7 within the circle of approximately 100m in radius about a repeater 6 is detected.

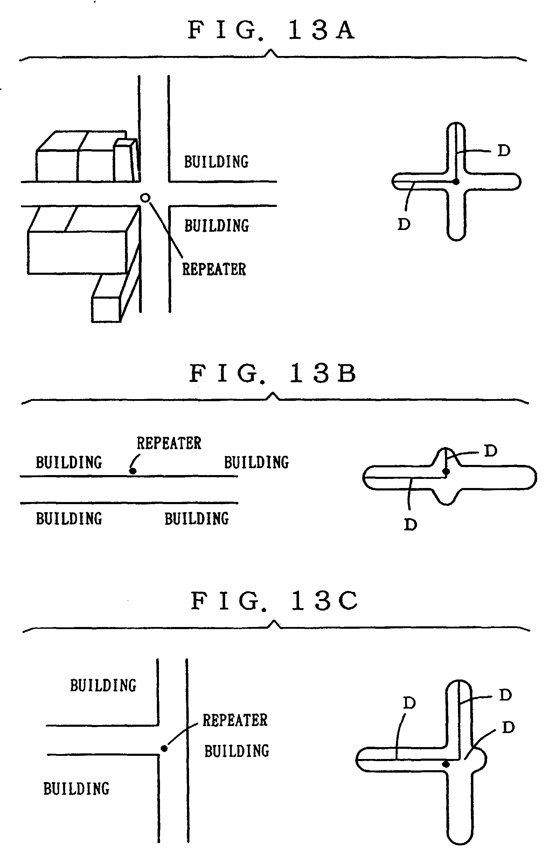

When the position is to be determined in such a system, cell 8 is not always a circle depending upon the status around the repeater. When the PHS owner is located at a site where wave propagation is blocked by some building and the like, various wave propagation patterns according to various cases shown in Figs. 13A-13C taking account of the arrangement and profile of that building and the like is required. Here, a wave propagation pattern indicates a pattern of a region having a wave intensity emitted from a repeater exceeding a constant value taking into consideration the environmental status of the repeater. In accounting for a building structure as an example of environmental status of the repeater in producing a wave propagation pattern, an operator had to select the propagation pattern from the pattern shown in Figs. 13A-13C according to the position relationship between the repeater and the surrounding facility in the conventional case. The propagation pattern had to be calculated according to the selected pattern. Thus, there was a problem that computation of the wave propagation pattern is time consuming.

The present invention is provided to solve the above problems. An object of the present invention is to provide an electric field intensity distribution preparation apparatus for easily determining a wave propagation pattern and a mobile communication system using the electric field intensity distribution preparation apparatus.

Disclosure of Invention

A wave intensity distribution production apparatus of the present invention includes means for dividing the neighborhood about a wave generation source into meshes of a desired size, means for determining a predetermined type of the mesh on the basis of a map including the neighborhood of the wave generation source, means for obtaining electric field intensity of the mesh according to the determination result by said determination means and the electric field intensity of the wave generation source, and means for producing an electric field intensity distribution of the neighborhood of the wave generation source according to the obtained electric field intensity.

The neighborhood of the wave generation source is divided into meshes of a desired size. Each divided mesh is determined corresponding to a predetermined type according to the electronic map. The electric field intensity of each mesh is obtained according to the determination result and the electric field intensity from the wave generation source. An electric field intensity distribution of the neighborhood of the wave generation source is produced according to the electric field intensity. Since the electric field intensity distribution is produced taking into consideration the actual geometry of the wave generation source, a wave propagation pattern of the neighborhood of the wave generation source can be easily determined.

According to another aspect of the present invention, a mobile communication system carries out communication between a moving second station and a third station via a first station. The first station emits a wave of a predetermined frequency at a predetermined intensity. The mobile communication system includes means for producing the electric field intensity distribution of the wave emitted from the first station at the neighborhood of the first station. The means for producing an electric field intensity distribution includes means for dividing the neighborhood about the first station into meshes of a desired size, means for determining a predetermined type for the mesh on the basis of a map including the neighborhood of the first station, means for obtaining the electric field intensity for each mesh according to the determination result by the determination means and the distance between the first station and the mesh, and means for producing an electric field intensity distribution of the neighborhood of the first station according to the obtained electric field intensity. The second station provides the information for identifying the first station and the electric field intensity thereof at the time of communication with the first station to the third station. The third station determines the position of the second station from the identification information and the electric field intensity of the first station sent from the second station, and an electric field intensity distribution.

In a mobile communication system that carries out communication between a moving second station and a third station via a first station, the electric field intensity distribution of the neighborhood of the first station from which the wave is emitted is produced for every predetermined mesh. In communication with the third station, the second station provides the electric field intensity of the first station. From the electric field intensity and the electric field intensity distribution, the position of the second station is determined at the third station. Thus, a mobile communication system that can easily determine the position of a second station in a short time can be provided.

Brief Description of the Drawings

Fig. 1A is a block diagram showing a structure of a center station of a position determination system of the present invention, and Fig. 1B is a diagram showing contents of data of a repeater electric field intensity distribution database.
Fig. 2 is a flow chart indicating the procedure of producing an electric field intensity distribution centered about a repeater.
Fig. 3 is a diagram showing a concept of meshes centered about a repeater.
Fig. 4 is a diagram showing a concept of meshes with and without sight.
Fig. 5 is a diagram showing a mesh determination method taking into consideration the height direction of a building structure.
Fig. 6 is a diagram showing an electric field intensity distribution of a repeater.
Fig. 7 is a diagram showing a wave propagation pattern when the electric field intensity is 20 decibels.
Fig. 8 is a diagram showing measured value data between electric field intensity and distance.
Fig. 9 is a diagram showing measured value data between electric field intensity and distance.
Fig. 10 is a block diagram showing an entire structure of a position display system of a mobile terminal.
Fig. 11 is a block diagram showing a structure of a center station.
Fig. 12 is a block diagram showing a structure of a center station.
Figs. 13A-13C show the relationship with the wave propagation pattern of a building structure.
Fig. 14 shows a specific example of position identification using an electric field intensity distribution.
Fig. 15 is a diagram showing an example of position identification using an electric field intensity distribution.
Fig. 16 is a diagram showing an example of position identification using an electric field intensity distribution.
Fig. 17 is a diagram showing an example of position identification using an electric field intensity distribution.
Figs. 18A and 18B are diagrams showing measurement examples of a delay profile for determination of a direct wave.

Best Mode for Practicing the Invention

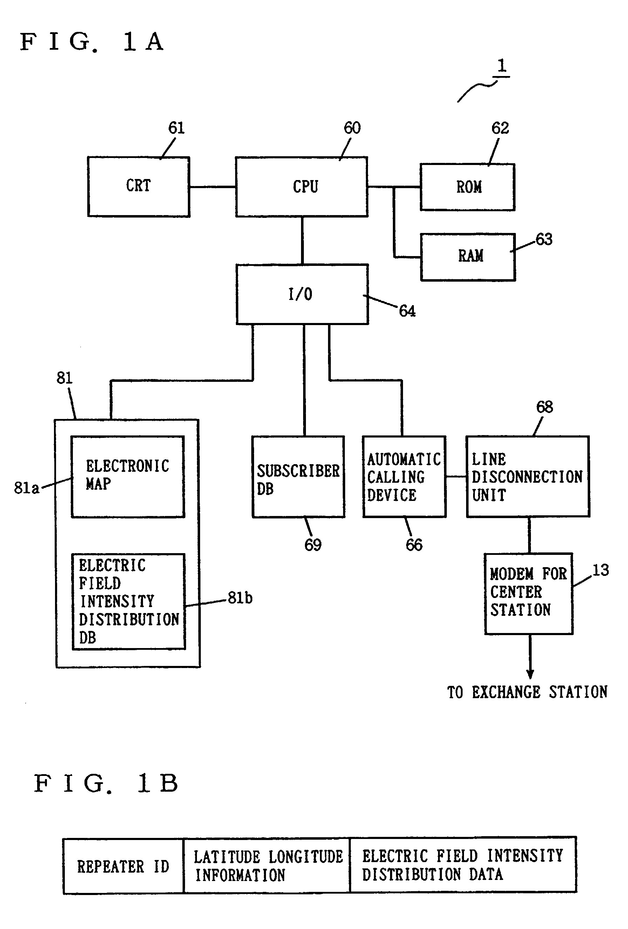

An embodiment of the present invention will be described hereinafter with reference to the drawings. Fig. 1A is a block diagram of a center station 1 using the positioning system of the present invention. In contrast to the conventional case of Fig. 12, provision of an electric field intensity distribution database 81 in which an electronic map 81a and a repeater electric field intensity distribution database 81b are integrally formed differs from the conventional center station 91. The data contents of the repeater electric field intensity distribution database are shown in the drawing. The data contents of the repeater electric field intensity distribution database are shown in Fig. 1B. As shown in Fig. 1B, the repeater electric field intensity distribution database includes the ID of respective repeaters, the latitude and longitude information indicating the position, and electric field intensity distribution data for each mesh at the neighborhood of that repeater. The remaining elements are similar to those of the conventional case. Corresponding elements have the same reference characters allotted, and their description will not be repeated.

A mobile terminal detects the identification information ID of a plurality of repeaters and electric field intensity. This information is sent to center station 1. Center station 1 obtains the region where the mobile terminal can be located with respect to each electric field intensity using the electric field intensity distribution of each repeater obtained in advance from the identification information and electric field intensity of the plurality of repeaters. The position of the mobile terminal is detected from the overlap of each region.

(1) Production of electric field intensity distribution of neighborhood of repeater

Description is provided of how center station 1 obtains the electric field intensity distribution of the neighborhood of repeater 6.

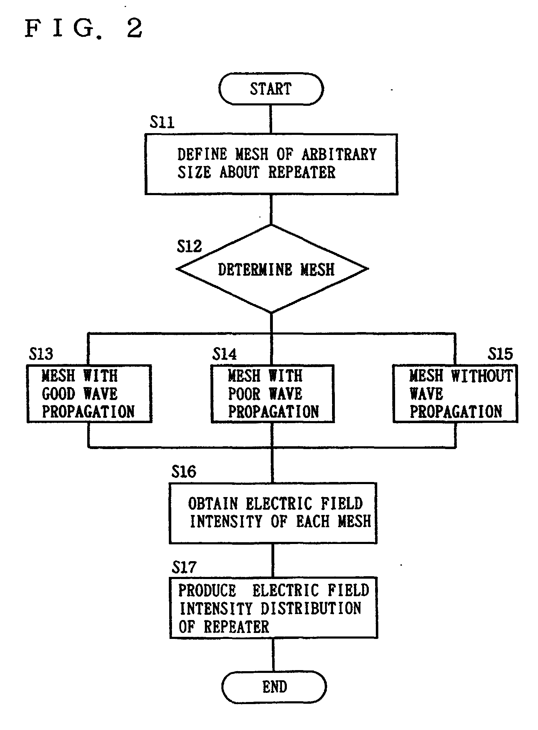

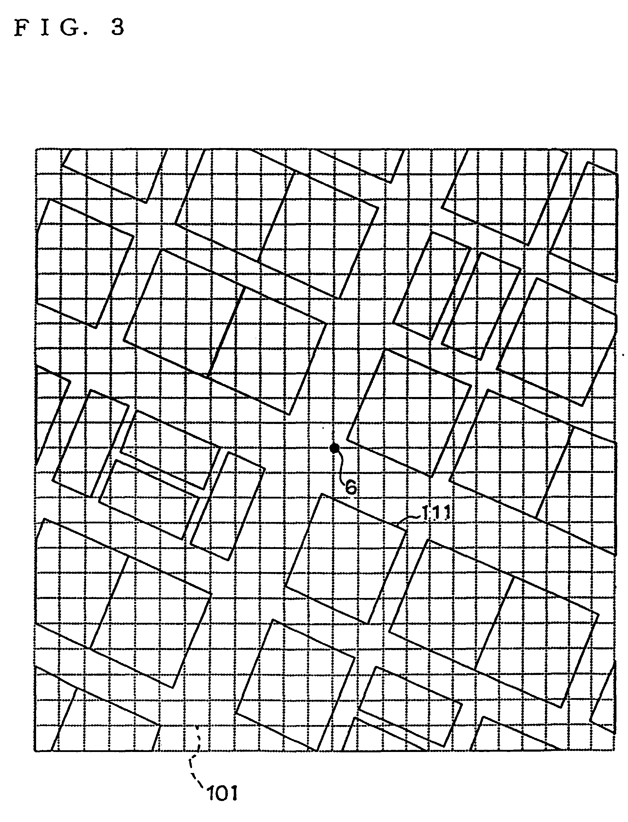

Fig. 2 is a flow chart of obtaining an electric field intensity distribution of the neighborhood of repeater 6. Figs. 3-6 are diagrams describing the steps of obtaining an electric field intensity distribution. The method of obtaining electric field intensity distribution of repeater 6 will be described with reference to Figs. 2-6.

As shown in Fig. 3, a mesh of an arbitrary size about a repeater is defined as the region required to produce a wave propagation pattern. Here, this mesh becomes the unit in producing an electric field intensity distribution. The size of the mesh and the size of the region defining the mesh are defined within a tolerable range of precision and data size.

Referring to Fig. 3, a mesh 101 is formed at the neighborhood of repeater station 6. Then, referring to electronic map 81a, the shape of the building that becomes an obstacle for the wave is formed as a building polygon 111 in the region where mesh 101 is formed (in Fig. 2, step S11: "step" omitted hereinafter).

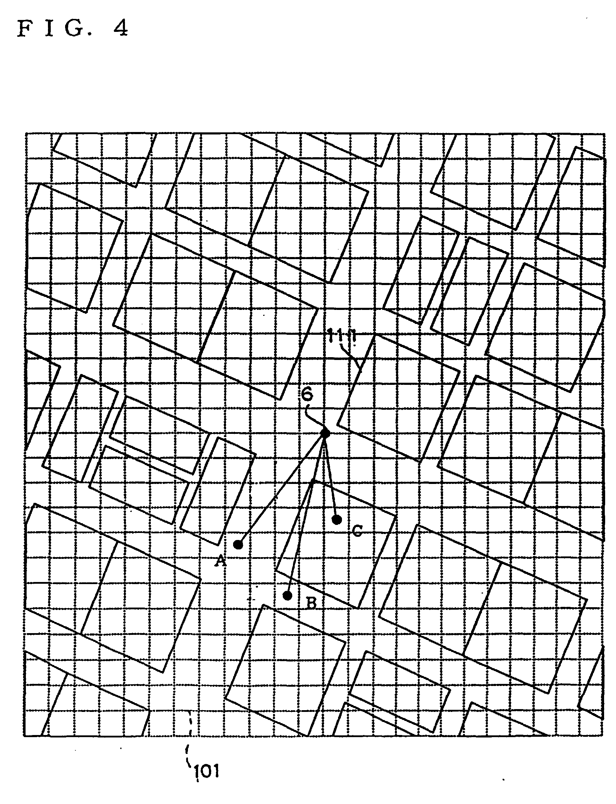

Each divided mesh is subjected to a process set forth in the following. When the center point of that mesh is located within building polygon 111 on electronic map 81a, that mesh is set as a mesh with no wave propagation. When the center point of the mesh is outside building polygon 111, the crossing point between building polygon 111 and the line connecting the center points of repeater 6 and the mesh is obtained (S12-S15). When there is no crossing point, that mesh is set as a mesh A with good wave propagation. When there is a crossing point, that mesh is set as a mesh B with poor wave propagation. The mesh inside building polygon 111 is set as a mesh C with no wave propagation. A specific example is shown in Fig. 4. Even if there is a crossing point with building polygon 111, the mesh is set as a mesh with good wave propagation when the height of the building is lower than the difference in height from repeater 6 to the center point of the mesh. The height of the building is obtained using the information of the number of stories of that building and the like on electronic map 81a.

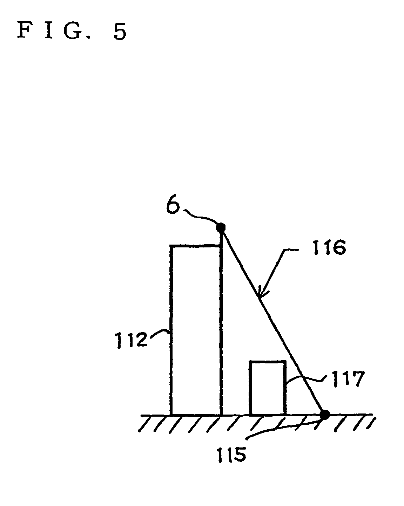

An example of this case is shown in Fig. 5. Referring to Fig. 5, when repeater 6 is on a building 112, the mesh is set as a mesh with good wave propagation when a straight line 116 connecting repeater 6 with the mesh center point 115, indicating the change in height, does not cross building 117.

The electric field intensity of each mesh is obtained using a relation equation of an electric field intensity and wave propagation distance on the basis of the distance between the center point of the repeater and the center point of each mesh (S16). The equation of the relationship between electric field intensity and wave propagation distance is produced for each type of repeater 6 depending upon whether the wave propagation is superior or not and whether is provided on a telephone booth, a pole, or the roof of a building structure. Also, wave reflection and waveguide effect due to the state of the building around the mesh in obtaining the electric field intensity of each mesh are taken into account.

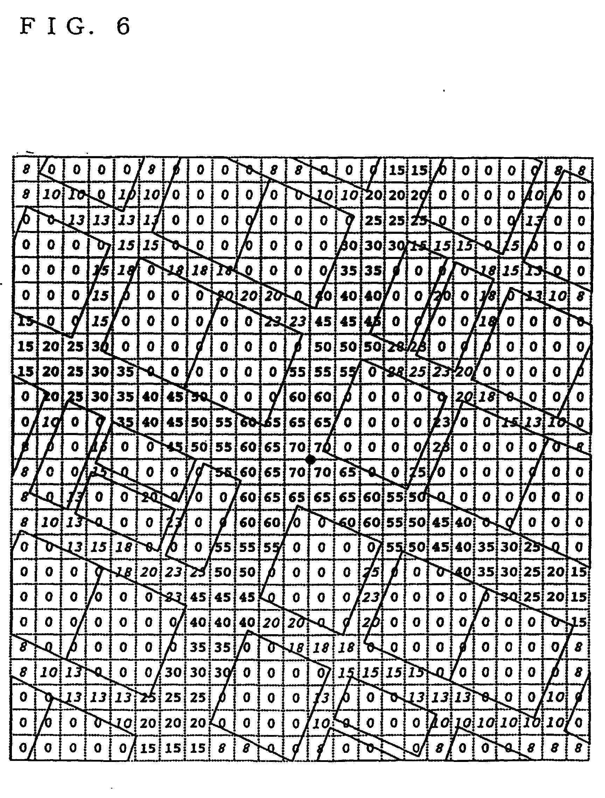

An electric field intensity distribution of a repeater is produced according to each obtained mesh electric field intensity (S17). An example of the electric field intensity distribution of the repeater is shown in Fig. 6. In Fig. 6, the bold numeric in the mesh indicates a mesh with good wave propagation, and a numeric represented in a slanted manner indicates a mesh with poor wave propagation. The electric field intensity distribution is obtained in a similar manner for all the repeaters. A database is produced that can be retrieved by entering the ID of repeater 6.

The method of determining the position using this database will be described hereinafter.

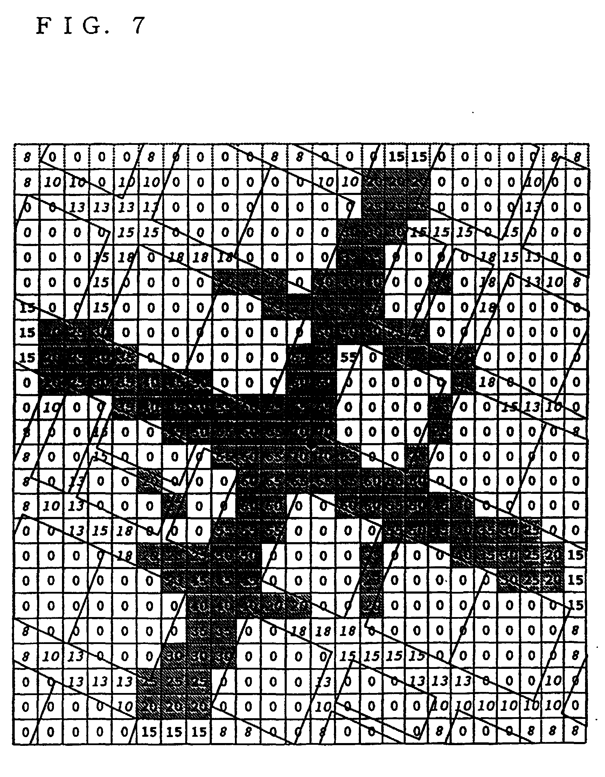

A specified repeater 6 is retrieved from electric field intensity distribution database 81b. A group of meshes having an electric field intensity of at least an arbitrary value is set as the wave propagation pattern of an arbitrary electric field intensity. This example is shown in Fig. 7. The shaded area in Fig. 7 represents the wave propagation pattern. Here, the wave propagation pattern when the electric field intensity is 20dB is shown. By setting the electric field intensity to a desired value, a wave propagation pattern of a desired intensity can be obtained.

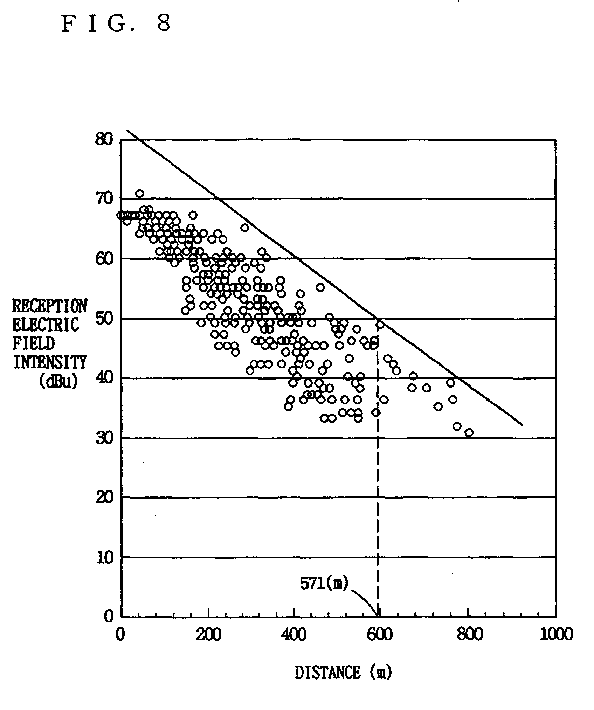

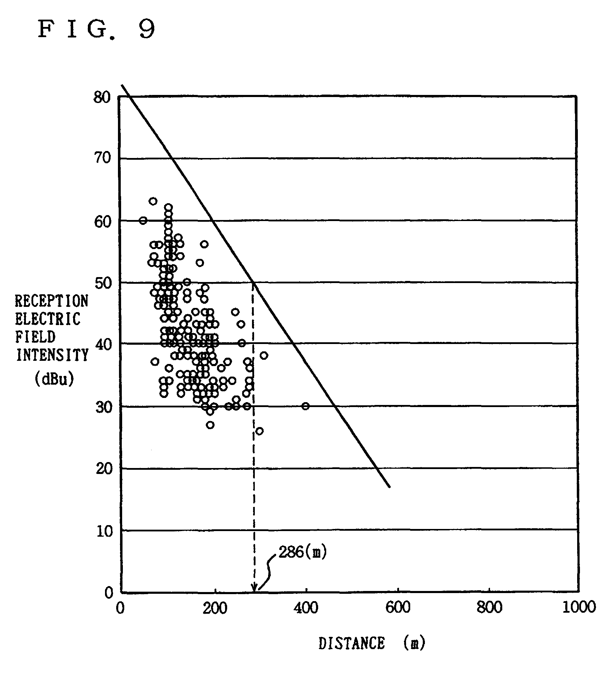

The method of obtaining each mesh electric field intensity of S16 will be described hereinafter. Figs. 8 and 9 are graphs indicating the measured results of the distance from each repeater 6 and the reception electric field intensity when wave propagation is good (Fig. 8) and poor (Fig. 9). This corresponds to the case where the repeater corresponds to a telephone booth. The equation of the relationship between the electric field intensity and the maximum wave propagation distance is obtained from the graph to result in the following equations.

Propagation distance N(m) = - (electric field intensity (dB) - 82)/0.056 ... (when wave propagation is good).

Propagation distance N(m) = - (electric field intensity (dB) - 82)/0.112 ... (when wave propagation is poor).

Electric field intensity for each mesh is obtained according to the above equation for both cases of good and poor wave propagation.

The wave propagation pattern of an arbitrary electric field intensity can be obtained from the wave propagation pattern for each intensity of repeater 6 and an arbitrary electric field intensity stored in data base 81 without having to obtain the crossing point with the building data on the electronic map every time.

Also, the computation time for obtaining a wave propagation pattern of an arbitrary electric field intensity is reduced since the crossing with the building data on the map is not obtained every time.

It is not necessary to obtain the crossing point with the building data on the electric map for each measurement since the electric field intensity of an arbitrary position centered about repeater 6 is stored in database 81b. Therefore, the computation time for obtaining the wave propagation pattern of an arbitrary electric field is reduced.

The wave employed in the present invention is described hereinafter. The wave used for communication with a repeater is preferably a direct wave, not a reflected wave or the like. A method of determining this direct wave will be described hereinafter.

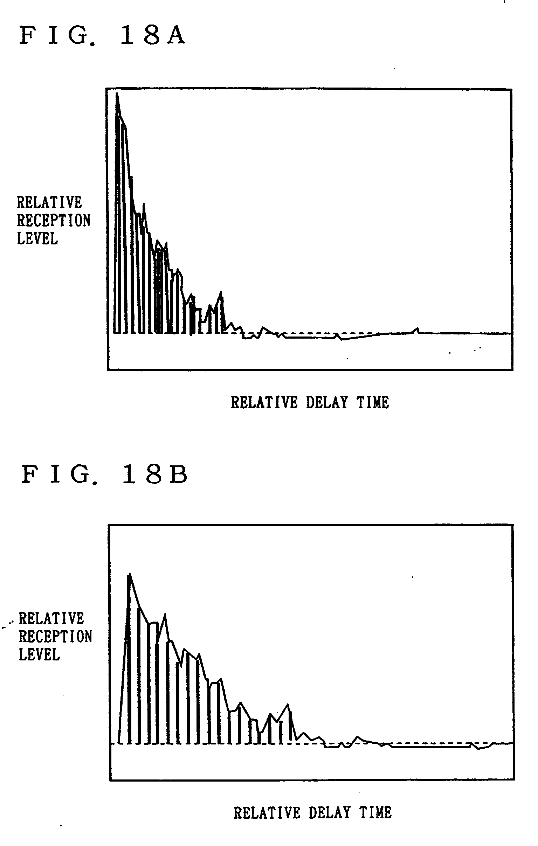

Figs. 18A and 18B show a wave delay profile with the delay time of the wave arriving at respective points plotted along the abscissa and the power of each wave plotted along the ordinate. Fig. 18A corresponds to the case where a direct wave is received. Fig. 18B corresponds to the case where a direct wave is not received. Referring to Figs. 18A and 18B, the wave with the shortest delay time is the wave that arrives from the transmitted point through the shortest distance. A wave with a longer delay time is a wave that arrives at a reception point through reflection and diffraction. Since the distance to the reflected • diffracted point is altered as the distance of travel increases, the delay profile is altered according to the travel. When the direct wave is received within the sight where the wave is received directly, the wave with the shortest delay time is set as the direct wave from the delay profile. However, there is a case where the direct wave cannot be received by being blocked by the shadow of a facility such as the building. In this case, determination is made whether a direct wave is received or not using a delay spread property. This delay spread represents the spread of the delay time by rendering the area of the shaded region in Fig. 18B constant (normalized). According to the spread of the delay time of this delay spread property, determination can be made that a direct wave is received when the spread is small, and a direct wave is not received when the spread is great.

The waveform shown in Figs. 18A and 18B can be obtained by separating the components of the arriving wave (direct wave, reflected wave and the like) by a traversal filter or a filter used in RAKE reception.

In the above embodiment, the position of the mobile terminal is determined by obtaining the electric field intensity distribution at one repeater. The present invention is not limited to the above embodiment, and the positioning can be made more precise by using an electric field intensity distribution obtained from a plurality of repeaters. In this case, the position of respective meshes is identified by the latitude and longitude information of the repeater ID. Therefore, the position of the mobile terminal can be easily detected by comparing the electric field intensity distribution of respective repeaters for each mesh.

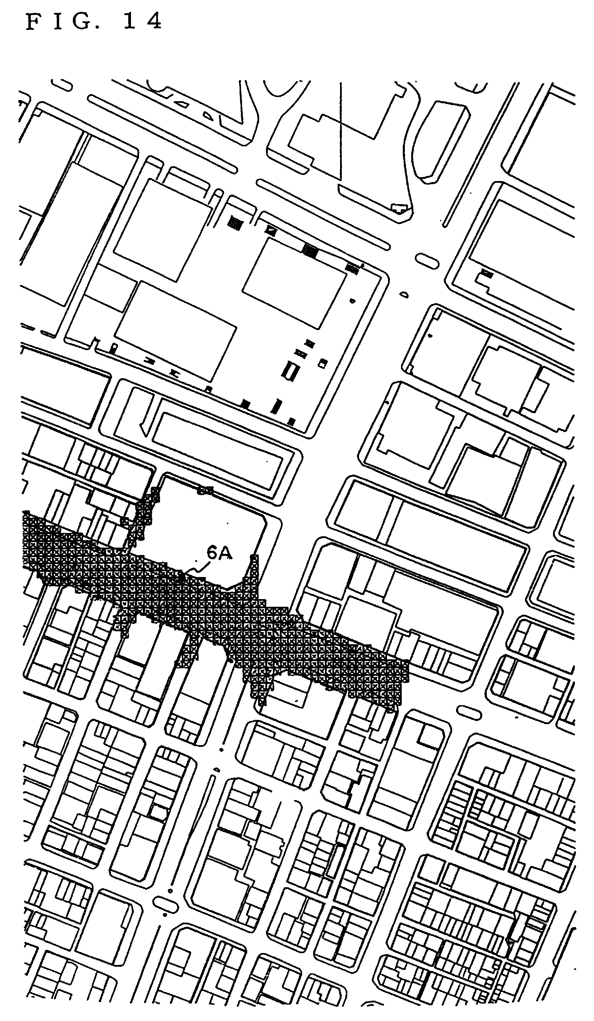

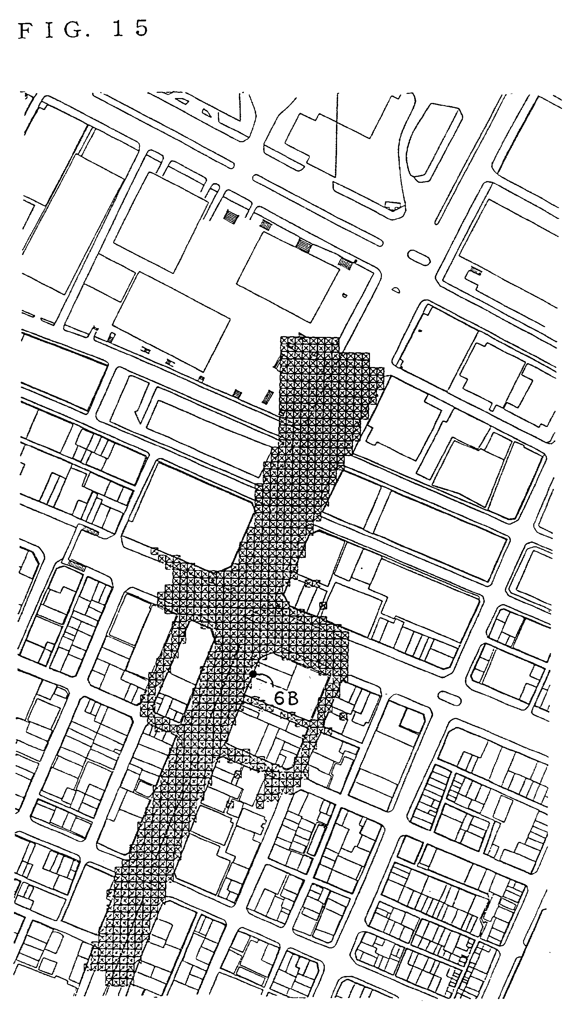

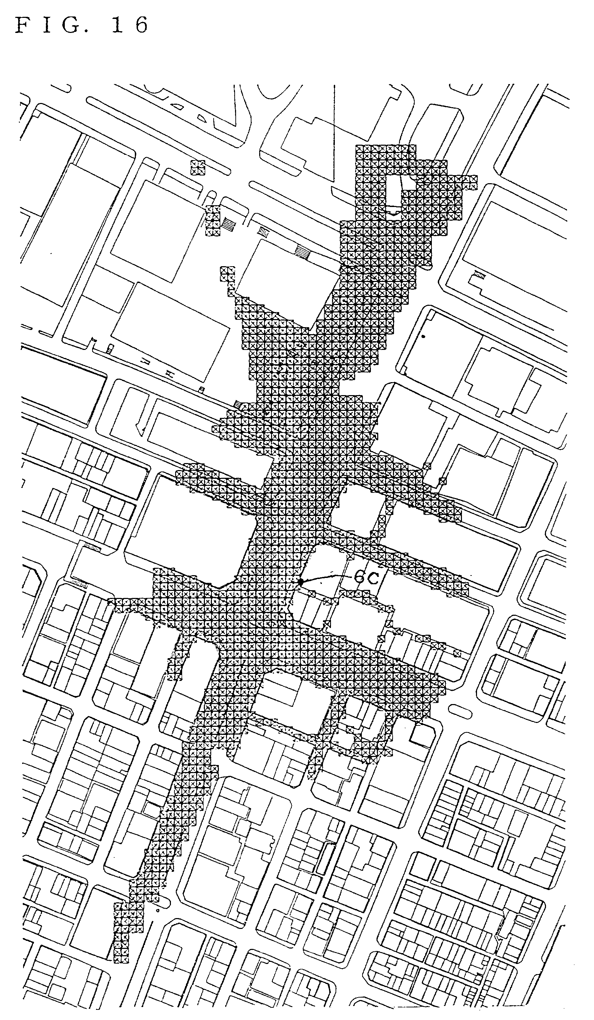

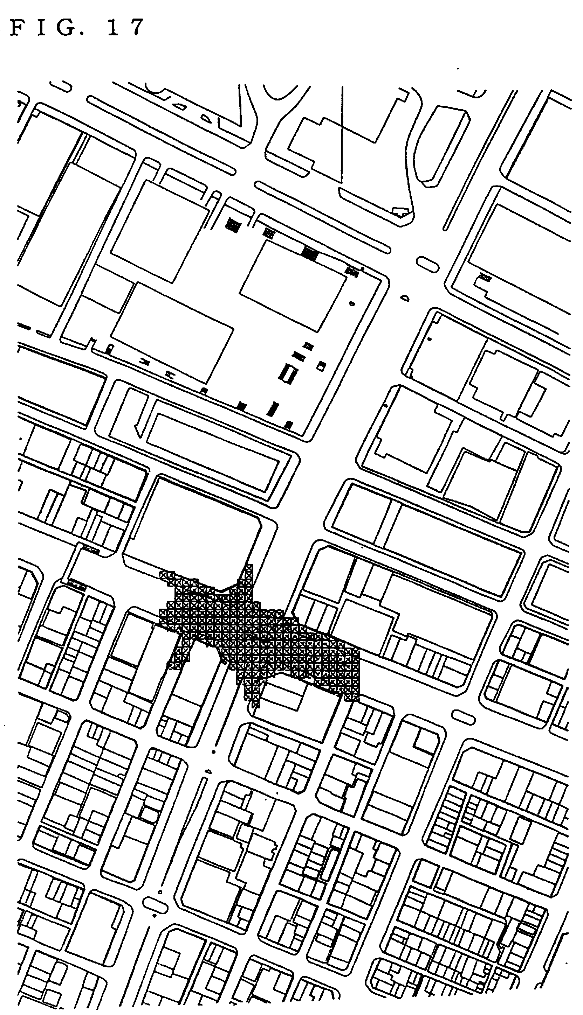

An example of this case will be described with reference to Figs. 14-17. Figs. 14-16 show meshes having an electric field intensity exceeding a predetermined value on the basis of respective repeaters 6A-6C. By obtaining the overlapping area on the basis of the data from these three repeaters, the precise position of the mobile terminal can be identified as shown in Fig. 17.

In the above embodiment, center station 1 receives information of repeater 6 from control station 51 by establishing communication between center station 1 and mobile station 7. The present invention is not limited to the above embodiment, and the repeater database can be provided at center station 1. Information of the neighborhood of repeater 6 can be received from mobile station 7. The repeater can be identified at center station 1 according to the received information. In this case, the database of center station 1 includes the ID for identifying a repeater and the position information.

Industrial Applicability

Since the electric field intensity distribution preparation apparatus of the present invention can easily determine a wave propagation pattern centered about a repeater, it is applicable to usage in a position determination apparatus employing a wave.

**Claims**

1.   An electric field intensity distribution preparation apparatus comprising:

means for dividing a neighborhood of a wave generation source into meshes of a desired size, centered about said wave generation source,

means for determining a predetermined type of said mesh on the basis of a map including the neighborhood of said wave generation source,

means for obtaining electric field intensity for each said mesh according to a determination result by said determination means and a distance between said wave generation source and said mesh, and

means for preparing an electric field intensity distribution of the neighborhood of said wave generation source according to said obtained electric field intensity.

2. The electric field intensity distribution preparation apparatus according to claim 1, wherein the type of a mesh determined by said determination means includes a first region of good sight from said wave generation source and a second region of poor sight.

3. The electric field intensity distribution preparation apparatus according to claim 2, wherein said means for obtaining electric field intensity for each mesh is carried out according to the distance from said wave generation source and an actually measured value of reception electric field intensity of that distance.

4. The electric field intensity distribution preparation apparatus according to claim 2, wherein said means for obtaining electric field intensity for each mesh is carried out using

propagation distance N(m) = - (electric field intensity (dB) - 82)/0.056 for said first region, and

propagation distance N(m) = - (electric field intensity (dB) - 82)/0.112 for said second region.

5. The electric field intensity distribution preparation apparatus according to claim 2, wherein said second region includes a third region where a wave is not reached.

6. The electric field intensity distribution preparation apparatus according to claim 1, wherein said means for dividing into meshes determines said desired size by a precision of said electric field intensity distribution.

7. The electric field intensity distribution preparation apparatus according to claim 1, wherein said means for obtaining electric field intensity is carried out taking into consideration reflection of a wave from said wave generation source due to a building structure at the neighborhood of said mesh.

8. The electric field intensity distribution preparation apparatus according to claim 1, comprising means for storing said produced electric field intensity distribution.

9. The electric field intensity distribution preparation apparatus according to claim 1, wherein a plurality of said wave generation sources are provided, and said means for producing electric field intensity distribution produces said electric field intensity distribution for said plurality of wave generation sources.

10. The electric field intensity distribution preparation apparatus according to claim 9, comprising means for storing said produced plurality of electric field intensity distributions.

11. The electric field intensity distribution preparation apparatus according to claim 10, wherein said storing means stores said produced plurality of electric field intensity distributions as a database.

12. The electric field intensity distribution preparation apparatus according to claim 1, wherein said wave generation source is a repeater of a communication system.

13. The electric field intensity distribution preparation apparatus according to claim 12, wherein said communication system includes a mobile communication system that effects communication with said repeater as a base.

14. A mobile communication system for carrying out communication between a mobile second station and a third station via a first station, wherein said first station emits a wave of a predetermined frequency at a predetermined intensity, comprising:

means for producing an electric field intensity distribution of a wave emitted from said first station at a neighborhood of said first station,

said means for producing an electric field intensity distribution comprises

means for dividing the neighborhood of the first station into meshes of a predetermined size, centered about said first station,

means for determining a predetermined type of said mesh on the basis of a map including the neighborhood of said first station,

means for obtaining electric field intensity for each said mesh according to a determination result by said determination means and a distance between said first station and said mesh, and

means for producing an electric field intensity distribution of the neighborhood of said first station according to said obtained electric field intensity,

wherein said second station provides information identifying said first station and electric field intensity thereof to said third station when communicating with said first station,

wherein said third station determines a position of said second station from said provided identification information and electric field intensity of said first station, and said electric field intensity distribution.

15. The mobile communication system according to claim 14, comprising a plurality of said first stations,

wherein said second station carries out communication via said plurality of first stations,

wherein said electric field intensity distribution producing means produces electric field intensity of the neighborhood of said plurality of first stations,

wherein said second station provides information identifying said plurality of first stations and electric field intensity thereof to said third station when communicating with said plurality of first stations,

wherein said third station determines a position of said second station from said provided information of identifying said plurality of first stations and electric field intensity thereof, and said electric field intensity distribution.

# FIG. 1A

# FIG. 1B

| REPEATER ID | LATITUDE LONGITUDE INFORMATION | ELECTRIC FIELD INTENSITY DISTRIBUTION DATA |
|---|---|---|
| | | |

F I G. 2

```
                    ┌──────────┐
                    │  START   │
                    └────┬─────┘
                         │
  S11  ┌──────────────────────────────┐
       │  DEFINE MESH OF ARBITRARY     │
       │  SIZE ABOUT REPEATER          │
       └───────────────┬───────────────┘
                       │
  S12            ◇ DETERMINE MESH ◇
                       │
      ┌────────────────┼────────────────┐
 S13  │            S14 │            S15  │
 ┌──────────┐   ┌──────────┐   ┌──────────────┐
 │ MESH WITH│   │ MESH WITH│   │ MESH WITHOUT │
 │ GOOD WAVE│   │ POOR WAVE│   │ WAVE         │
 │PROPAGATION│  │PROPAGATION│  │ PROPAGATION  │
 └────┬─────┘   └────┬─────┘   └──────┬───────┘
      └──────────────┼───────────────┘
                     │
 S16  ┌──────────────────────────────┐
      │  OBTAIN ELECTRIC FIELD        │
      │  INTENSITY OF EACH MESH       │
      └───────────────┬───────────────┘
                      │
 S17  ┌──────────────────────────────┐
      │ PRODUCE  ELECTRIC FIELD       │
      │ INTENSITY DISTRIBUTION        │
      │ OF REPEATER                   │
      └───────────────┬───────────────┘
                      │
                ┌──────────┐
                │   END    │
                └──────────┘
```

F I G. 3

F I G. 4

FIG. 5

F I G.  6

FIG. 7

F I G. 8

RECEPTION
ELECTRIC
FIELD
INTENSITY
(dBu)

DISTANCE (m)

571(m)

FIG. 9

# F I G. 1 0

F I G.  1 1

91

10.MAP ON SCREEN OF DISPLAY

N
Δ

STATION
ΔΔ

POND

ΔΔTOWN

PARK

8.CELL

61.DISPLAY

9.MARKER INDICATING
REPEATER

11.KEYBOARD

12.PERSONAL COMPUTER
OR WORK STATION

13.MODEM FOR CENTER STATION

TO TELEPHONE EXCHANGE STATION ⇐

F I G. 1 2

EP 0 967 816 A1

EP 0 967 816 A1

# FIG. 13A

BUILDING

BUILDING

REPEATER

D

D

# FIG. 13B

REPEATER
BUILDING        BUILDING
BUILDING        BUILDING

D

D

# FIG. 13C

BUILDING

REPEATER
BUILDING

BUILDING

D   D

D

21

F I G. 1 4

FIG. 15

6B

FIG. 16

F I G. 1 7

F I G. 1 8 A

RELATIVE
RECEPTION
LEVEL

RELATIVE DELAY TIME

F I G. 1 8 B

RELATIVE
RECEPTION
LEVEL

RELATIVE DELAY TIME

# INTERNATIONAL SEARCH REPORT

| | International application No. |
| --- | --- |
| | PCT/JP98/00930 |

**A. CLASSIFICATION OF SUBJECT MATTER**
Int.Cl$^6$ H04Q7/34

According to International Patent Classification (IPC) or to both national classification and IPC

**B. FIELDS SEARCHED**

Minimum documentation searched (classification system followed by classification symbols)
Int.Cl$^6$ H04B7/26, 17/00, H04Q7/00-7/38

Documentation searched other than minimum documentation to the extent that such documents are included in the fields searched
NTT DoCoMo Technical Journal

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | NTT DoCoMo Technical Journal Vol. 2, No. 4, January 1, 1995 (01. 01. 95) (Tokyo), Fujii, et al., "Cell Designing System for Mobil Communication (in Japanese)" p.28-34 | 1, 6-13<br>2, 3, 5, 14, 15 |
| X | Proceeding of 1991, Autumn General Meeting of IEICE Vol. 2, August 15, 1991 (15. 08. 91 (Tokyo), Kimura, et al., "High-Speed High-Accurary Estimation of Mobil Radio Propagation Loss (in Japanese)" p.2-225 | 1, 8-13 |
| Y | The Transaction of IEICE B-II Vol. J74-B-II No. 1, January 25, 1991 (25. 01. 91) (Tokyo), Sakagami, et al., "Estimation of Propagation Loss Considering City Structure (in Japanese)" p.17-25 | 6, 7 |
| Y | NTT DoCoMo Technical Journal Vol. 3, No. 4, January 1, 1996 (01. 01. 96) (Tokyo), Asakura, et al., "Cell Designing System Using Actual Propagation Data (in Japanese)" p.16-21 | 3 |

| ☒ | Further documents are listed in the continuation of Box C. | ☐ | See patent family annex. |
| --- | --- | --- | --- |

| | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| June 1, 1998 (01. 06. 98) | June 9, 1998 (09. 06. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP98/00930 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP, 8-107583, A  (Nippon Telegraph & Telephone Corp.),<br>April 23, 1996 (23. 04. 96)  (Family: none) | 14, 15 |

Form PCT/ISA/210 (continuation of second sheet) (July 1992)